# EUROPEAN PATENT SPECIFICATION

(11) **EP 4 121 853 B1**
(45) Date of publication and mention of the grant of the patent: **11.09.2024**
(21) Application number: 20746172.4
(22) Date of filing: 23.07.2020
(51) Int. Cl.: G06F 9/455

(54) **COORDINATED PLIANT CAPABILITIES ATTESTATION BETWEEN VIRTUAL FUNCTION DRIVERS AND A PHYSICAL FUNCTION DRIVER IN A VIRTUALIZED ENVIRONMENT**
KOORDINIERTE PLIANT-FÄHIGKEITENBESCHEINIGUNG ZWISCHEN VIRTUELLEN FUNKTIONSTREIBERN UND EINEM PHYSISCHEN FUNKTIONSTREIBER IN EINER VIRTUALISIERTEN UMGEBUNG
ATTESTATION DE CAPACITÉS CONFORMES COORDONNÉES ENTRE DES PILOTES DE FONCTION VIRTUELLE ET UN PILOTE DE FONCTION PHYSIQUE DANS UN ENVIRONNEMENT VIRTUALISÉ

(43) Date of publication of application: 25.01.2023
(73) Proprietor: Huawei Technologies Co., Ltd., Shenzhen, Guangdong 518129, (CN)
(72) Inventor: BELKAR, Ben-Shahar, 80992 Munich (DE)
(74) Representative: Goddar, Heinz J.
(86) International application number: PCT/EP2020/070799
(87) International publication number: WO 2022/017605

(56) References cited:
- US-A1- 2018 349 161

## Description

### BACKGROUND

The present disclosure, in some embodiments thereof, relates to virtual machines (VM), and, more specifically, but not exclusively, to communication between VMs and virtualized resources of physical hardware devices.

Hardware resources, in particular I/O devices such as storage devices, accelerator hardware, and network interfaces, may be virtualized. The virtualization of the hardware resources allows multiple VMs to share the same hardware resources.

US 2018/349161 A1 discloses techniques for providing adaptive virtual function (VF) drivers capable of operating with physical devices having a plurality of different hardware configurations. In one embodiment, for example, an apparatus may include logic to implement a virtual machine (VM), the logic to initialize an adaptive virtual function (VF) driver to facilitate communication between the VM and a physical device to be virtualized, establish communication between the adaptive VF driver and a physical function (PF) driver of the hypervisor for the physical device, activate a standard feature set for the adaptive VF driver to execute on a PF of the physical device, and negotiate activation of an advanced feature set for the adaptive VF driver to execute on the PF, the adaptive VF driver to provide the advanced feature set to the PF, the PF activate each feature of the advanced feature set supported by the PF.

### SUMMARY

It is an object of the present disclosure to provide a computing device, a method, and a computer-readable storage medium for virtualized hardware resources of an input/output (I/O) device. The present invention is defined by the appended set of claims. Preferred embodiments are defined by the dependent claims.

The foregoing and other objects are achieved by the features of the independent claims. Further implementation forms are apparent from the dependent claims, the description and the figures.

According to a first aspect, a computing device in communication with an input/output, I/O, device providing virtualized hardware resources for use by a plurality of virtual machines, VM, wherein the computing device is configured to: execute a virtual machine manager (VMM) that implements a physical function, PF, driver corresponding to the I/O device and to a plurality of virtual function, VF, drivers implemented by the plurality of VMs, receive at least one message of the first message type transmitted from a virtual function, VF, driver of a VM to the PF, driver, wherein the at least one message of the first message type is formatted in a dynamic message format that includes: a first dynamic indication denoting a number of a plurality of capabilities, and a plurality of second dynamic indications each associated with one respective capability, each respective dynamic second indication is associated with a dynamic capability data indication that stores data of the respective capability, wherein a size of the data stored in the dynamic capability data indication is denoted by the corresponding second dynamic indication, wherein the first dynamic indication does not lock the dynamic message format to a specific size and the size of the dynamic message format is adapted to change to any size needed to define any number of supported capabilities, wherein the at least one message of the first message types includes a set of requested capabilities supported by the VF driver for enablement on or by the I/O device, transmit at least one message of a second message type from the PF driver to the VF driver, wherein the at least one message of the second message types includes a set of supported capabilities selected from the requested capabilities that are supported by the I/O device and PF driver for implementation thereon, and enable the set of supported capabilities by the I/O device and the PF driver for use by the VF driver.

According to a second aspect, a method for providing virtualized hardware resources of an input/output, I/O, device for use by a plurality of virtual machines, VM, the method comprises: executing a virtual machine manager (VMM) that implements a physical function, PF, driver corresponding to the I/O device and to a plurality of virtual function, VF, drivers implemented by the plurality of VMs, receiving at least one message of a first message type transmitted from a virtual function, VF, driver of a VM to the PF driver, wherein the at least one message of the first message type is formatted in a dynamic message format that includes: a first dynamic indication denoting a number of a plurality of capabilities, and a plurality of second dynamic indications each associated with one respective capability, each respective dynamic second indication a size of the data stored in the dynamic capability data indication is denoted by the corresponding second dynamic indication, wherein the first dynamic indication does not lock the dynamic message format to a specific size and the size of the dynamic message format is adapted to change to any size needed to define any number of supported capabilities, wherein the at least one message of the first message type includes a set of requested capabilities supported by the VF driver for enablement on or by the I/O device, transmitting at least one message of a second message type from the PF to the VF, wherein the at least one message of the second message type includes a set of supported capabilities selected from the requested capabilities that are supported by the I/O device and PF driver for implementation thereon, and enabling the set of supported capabilities by the I/O device and the PF driver for use by the VF driver.

The method according to the second aspect may be performed by a computer-readable storage medium storing program code, the program code comprising instructions, which when performed on a computer cause the computer to perform the method according to the second aspect.

The dynamic message format scales for easy extension of capabilities. The first indication, which is dynamic, does not lock the dynamic message format to a specific size, allowing new/old drivers to communicate dynamically. The size of the dynamic message format may change to any size needed to define any number of supported capabilities. Additional capabilities may be added to the VF driver and/or PF driver, without necessarily requiring adjustment of the driver code. Each respective capability is associated with its own variable data structure (i.e., the second dynamic indication) that stores data regarding which details of the respective capability are supported and/or which details are not.

In a further implementation form of the first and second aspects, each one of the plurality of capabilities defined by the dynamic message format is independently processed sequentially until the number of the plurality of capabilities defined by the first dynamic indication is reached.

Each capability may be individually negotiated, providing increased flexibility. The first dynamic indication enables detecting when all capabilities in the received first message type(s) have been negotiated.

In a further implementation form of the first and second aspects, the computing device is further configured to poll for additional messages of the first message type when the capabilities, defined in the received at least one message of the first message type, have been processed and a number of the processed capabilities is less than the number of capabilities defined by the first dynamic indication.

When the capabilities do not fit into one messages, multiple messages may be sent. The total number of capabilities may be tracked for activation. When one or more of the total messages are missing, the missing messages with missing capabilities may be requested for activation thereof.

When all capabilities in the received first message type(s) have been received but the total number of capabilities defined in the first dynamic indication has not been reached, it is in an indication that some capabilities are missing.

In a further implementation form of the first and second aspects, the dynamic messages format further includes a plurality of third dynamic indications each associated with one respective capability, each respective third dynamic indication denoting a version of the corresponding respective capability.

The capability version of the third dynamic indication may assist with internal features and/or bug fixes, for example, to allow code bypass on the PF and/or VF. The capability version of the third dynamic indication may provide easier backwards compatibility, in particular where only one side is upgraded, i.e., when only one of the VF and the PF are upgraded. New capabilities may be defined by newer versions, which may have distinctive fields for setting. Versions may be defined for each package of capabilities, making it is easy to negotiate the supported version between a new side and an old side. Capabilities may be individually selected for activation, for example, where the respective capability is a newer version of an older existing capabilities. Capabilities for which the version is irrelevant and/or unchanged do not necessarily need to be activated (since they are already activated and/or are irrelevant).

In a further implementation form of the first and second aspects, the dynamic messages format is implemented based on a type-version-length-value, TVLV, format, the type comprises an opcode denoting that the respective message is a capabilities messages, the version denotes the third dynamic indication, the length denotes the first dynamic indication, and the value denotes the second dynamic indication and corresponding capabilities data.

In a further implementation form of the first and second aspects, the dynamic messages format is implemented based on a type- length-value, TLV, format, the type comprises an opcode denoting that the respective message is a capabilities messages, the length denotes the first dynamic indication, and the value denotes the second dynamic indication and corresponding capabilities data.

The TLV and/or TVLV format enables one or more of: searching sequences of the messages using generalized parsing functions, data of capabilities within each message, including the second and/or third dynamic implementations, may be placed in any order within the message. Data within the message may be in binary format, which makes parsing faster and/or the data smaller.

In a further implementation form of the first and second aspects, the at least one message of the first message type comprises a plurality of messages, wherein the first dynamic indication of the dynamic message format denotes a total number of capabilities included in the plurality of messages, and wherein the dynamic message format further includes a fourth dynamic indication denoting a number of capabilities of the total number of capabilities of the first dynamic indication that are included in the respective message.

The SW/HW may prepare to receive an amount of data according to the remaining messages formatted according to the dynamic message format. Missed messages formatted according to the dynamic message format and/or remaining messages formatted according to the dynamic message format may be polled, until all messages have been received.

In a further implementation form of the first and second aspects, a start location within the respective message of the data associated with each respective capabilities is set to a fixed alignment value.

In a further implementation form of the first and second aspects, in response to the data associated with a certain respective capability being less than the fixed alignment value, the data associated with the certain respective capability is padded to reach the fixed alignment value.

The fixed alignment value optimizes processing of the capabilities of the respective message formatted according to the dynamic message format. For example, capabilities may be split according to the fixed alignment value, for parallel negotiation of activation.

In a further implementation form of the first and second aspects, the dynamic message format further comprises an opcode denoting a capabilities message and an indication selected from the group of: a first message, a middle message, a last message, and an only message.

In a further implementation form of the first and second aspects, the opcode is located at a start region of the dynamic message format.

In a further implementation form of the first and second aspects, at least one capability of the dynamic message format includes an opcode for exchange of at least one user register of the I/O device, and one or more of: register names of the at least one user register, register offset of the at least one user register, masks of the at least one user register, field sizes of the at least one user register, and bit locations of the at least one user register.
The dynamic message format may be used to change existing user registers.

In a further implementation form of the first and second aspects, the dynamic message format includes a fifth dynamic indication denoting an overall version of a package of the plurality of capabilities included in the at least one first message.
The capability version of the fifth dynamic indication may assist with internal features and/or bug fixes, for example, to allow code bypass on the PF and/or VF. The capability version of the fifth dynamic indication may provide easier backwards compatibility, in particular where only one side is upgraded, i.e., when only one of the VF and the PF are upgraded. New capabilities may be defined by newer versions, which may have distinctive fields for setting. Versions may be defined for each package of capabilities, making it is easy to negotiate the supported version between a new side and an old side. According to a third aspect, a computer-readable storage medium storing program code is provided. The program code comprising instructions, which when performed on a computer cause the computer to perform the method according to the second aspect.

Unless otherwise defined, all technical and/or scientific terms used herein have the same meaning as commonly understood by one of ordinary skill in the art to which the disclosure pertains. In addition, the materials, methods, and examples are illustrative only and are not intended to be necessarily limiting.

### BRIEF DESCRIPTION OF THE SEVERAL VIEWS OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

In the drawings:
FIG. 1 is a block diagram of components of a computing device that implements the dynamic message format for negotiating capabilities in a virtual environment, in accordance with some embodiments;
FIG. 2 is an dataflow diagram depicting exemplary dataflow between components of computing device described with reference to FIG. 1, in accordance with some embodiments;
FIG. 3 is a schematic depicting an exemplary message formatted in the dynamic message format, in accordance with some embodiments;
FIG. 4 is a flowchart of a method for negotiating capabilities between a VF driver and a PF driver using messages formatted in the dynamic message format, in accordance with some embodiments; and
FIG. 5 is schematic depicting an exemplary virtualized environment in which messages formatted according to the dynamic message format are implemented, in accordance with some embodiments.

### DETAILED DESCRIPTION

The present disclosure, in some embodiments thereof, relates to virtual machines (VM), and, more specifically, but not exclusively, to communication between VMs and virtualized resources of physical hardware devices.

An aspect of some implementations of the methods, apparatus, and/or code instructions described herein relates to a dynamic message format for messages transmitted between virtual function (VF) drivers implemented on VMs and a physical function (PF) function driver corresponding to a hardware device, optionally an input/output (I/O) device, for example, a network interface card (NIC), graphic adapter cards, and storage accelerator devices. The dynamic message format includes a first dynamic indication denoting a number of capabilities included in the respective message, and multiple second dynamic indications each associated with one respective capability. The number of second dynamic indications may correspond to the number of capabilities include in the respective message, i.e., one second dynamic indication per capability. Each respective dynamic second indication denotes a size of data stored in the respective message that is associated with the corresponding respective capability.

The messages are transmitted between the VF drivers and the PF driver during a phase of negotiating capabilities which are supported by the PF driver and the I/O device, and/or capabilities which are desired to be implemented on the I/O device by the VF drivers. In an exemplary negotiating session, one or more message of a first message type, which are formatted according to the dynamic message format, are transmitted from the VF driver to the PF driver. The first message type includes a set of requested capabilities supported by the VF driver for enablement on or by the I/O device. Second message(s) types are transmitted from the PF to the VF. The second message type(s) may be formatted according to the dynamic message format. The second message type(s) includes a set of supported capabilities selected from the requested capabilities that are supported by the I/O device and PF driver for implementation thereon. The set of supported capabilities are enabled by the I/O device and the PF driver for use by the VF driver.

Supported capabilities may include supported protocols, supported features, and/or supported technologies, for example, remote direct memory access (RDMA), receive side scaling (RSS).

At least some implementations of the methods, apparatus, and/or code instructions described herein address the technical problem of discovering capabilities of physical hardware devices for use by virtual machines, in particular, discovering capabilities provided by physical function drivers to virtual function drivers associated with VMs. In standard implementations, the structure of messages transferred between VF drivers and PF drivers is fixed or semi-fixed, limiting the number of capabilities which are negotiated, and limiting the parameters of the capabilities. The fixed structure of the messages lacks the flexibility and/or ability to scale. The problem is especially pronounced in datacenters, such as cloud services, where a large number of VMs are executed (e.g., thousands). Moreover, code executing on the VMs may be imported by external customers using the cloud service. Maximizing compatibility between the capabilities of the hardware devices available to the VM and capacities desired by the VM helps improve performance by maximizing the number of capabilities and/or parameters of the capabilities that the VMs are able to execute on the underlying hardware devices.

At least some implementations of the systems, methods, code instructions described herein provide a technical solution to the technical problem, by providing a dynamic message structure that accommodates any number of capabilities for negotiation and/or any size and/or any number of parameters of the capabilities. The dynamic messages structure is flexible and/or scales to increasing number of candidate capabilities and/or candidate parameters of the capabilities.

Before explaining at least one embodiment of the disclosure in detail, it is to be understood that the disclosure is not necessarily limited in its application to the details of construction and the arrangement of the components and/or methods set forth in the following description and/or illustrated in the drawings and/or the Examples. The disclosure is capable of other embodiments or of being practiced or carried out in various ways.

The present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

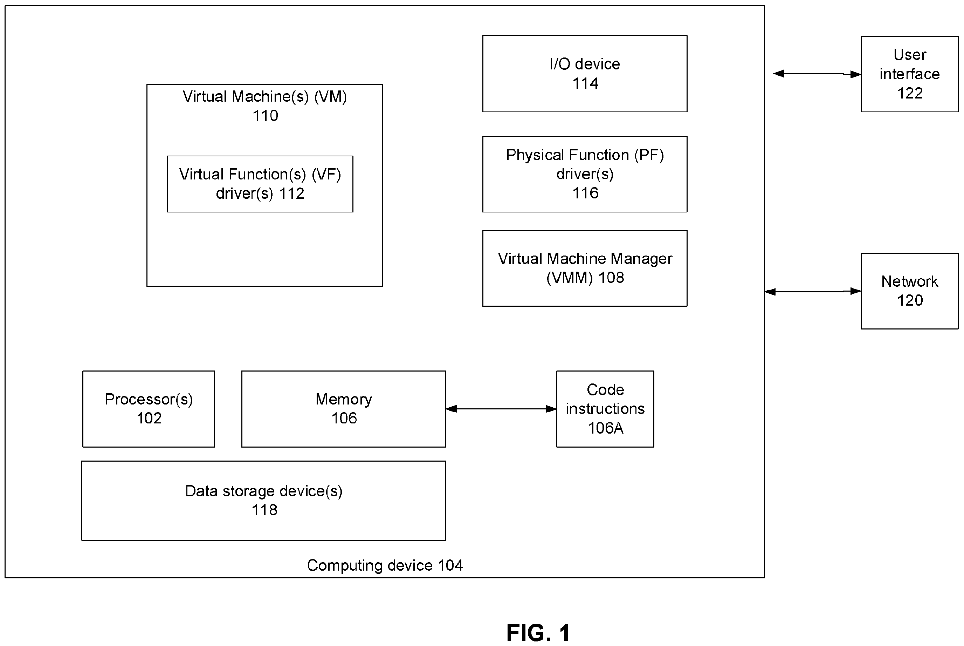

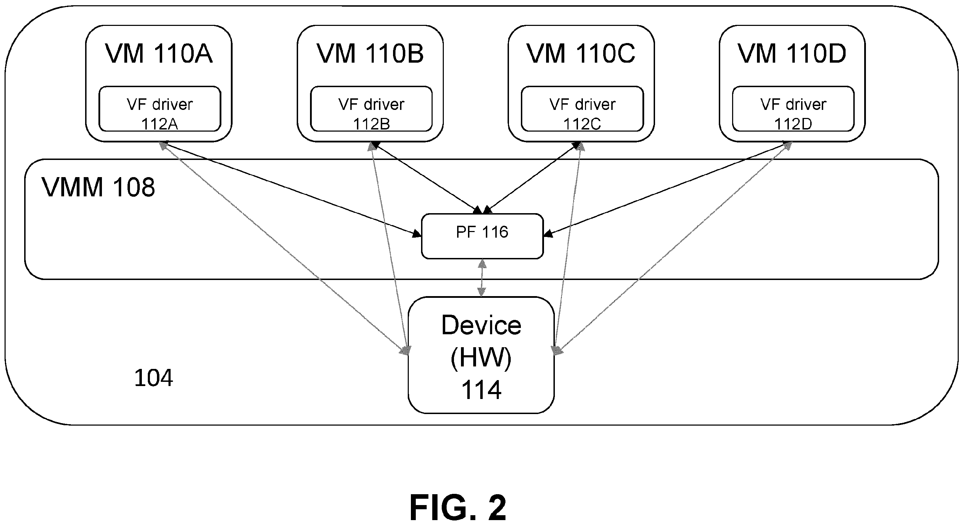

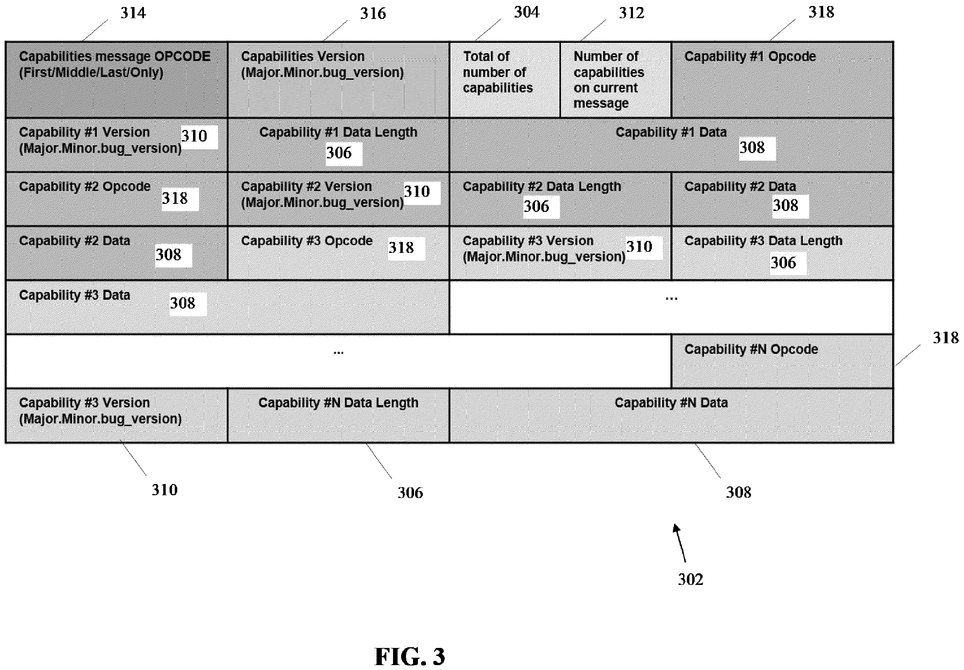

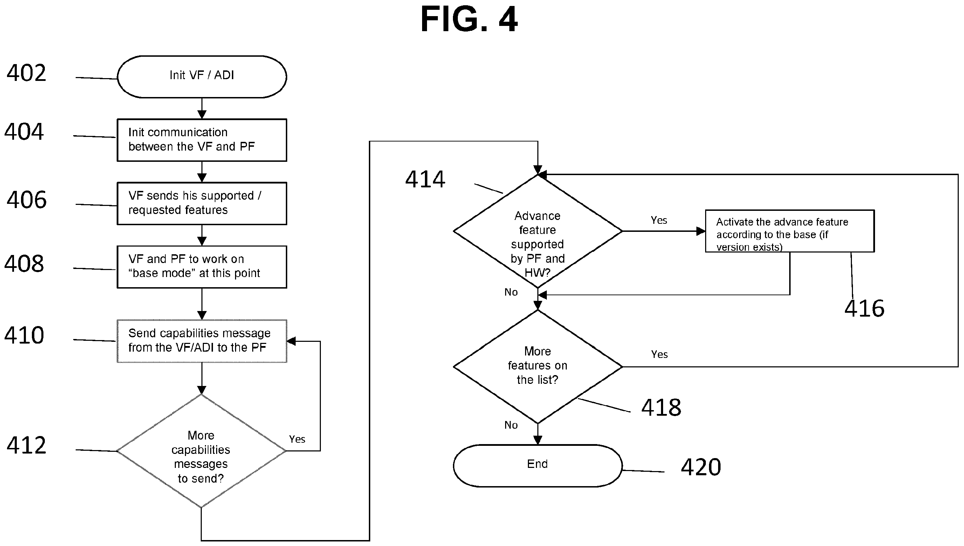

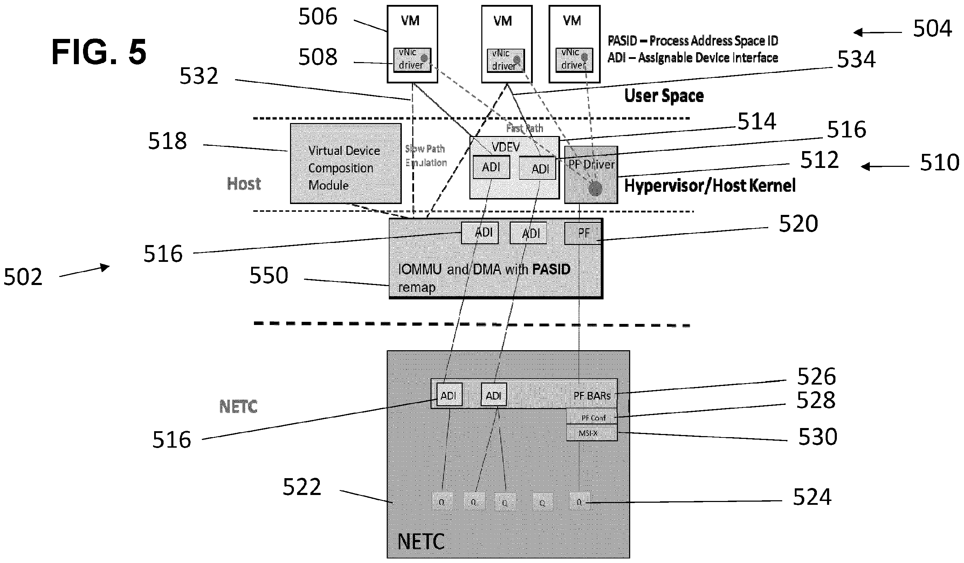

Reference is now made to FIG. 1, which is a block diagram of components of a computing device 104 that implements the dynamic message format for negotiating capabilities in a virtual environment, in accordance with some embodiments. Reference is also made to FIG. 2, which depicts exemplary dataflow between components of computing device 104 described with reference to FIG. 1, in accordance with some embodiments. Reference is also made to FIG. 3, which is a schematic depicting an exemplary message 302 formatted in the dynamic message format, in accordance with some embodiments. The dynamic message format scales for easy extension of capabilities. Messages transmitted by components of computing device described with reference to FIG. 1-2 may be formatted according to the dynamic message format described with reference to FIG. 3. Reference is also made to FIG. 4, which is a flowchart of a method for negotiating capabilities between a VF driver and a PF driver using messages formatted in the dynamic message format, in accordance with some embodiments. Reference is also made to FIG. 5, which depicts an exemplary virtualized environment 502 in which messages formatted according to the dynamic message format are implemented, in accordance with some embodiments. The features described with reference to FIGs. 4 and/or 5 may be implemented by components of computing device 104 described with reference to FIG. 1 and/or FIG. 2, using the dynamic message format described with reference to FIG. 3, for example, by processor(s) 102 of a computing device 104 executing code instructions (e.g., code 106A) stored in a memory 106.

Computing device 104 may be implemented as, for example, one or more of: a computing cloud, a single computing device (e.g., client terminal), a group of computing devices arranged in parallel, a network server, a local server, a remote server, a client terminal, a mobile device, a stationary device, a kiosk, a smartphone, a laptop, a tablet computer, a wearable computing device, a glasses computing device, a watch computing device, and a desktop computer.

Processor(s) 102, implemented as for example, central processing unit(s) (CPU), graphics processing unit(s) (GPU), field programmable gate array(s) (FPGA), digital signal processor(s) (DSP), application specific integrated circuit(s) (ASIC), customized circuit(s), processors for interfacing with other units, and/or specialized hardware accelerators. Processor(s) 102 may be implemented as a single processor, a multi-core processor, and/or a cluster of processors arranged for parallel processing (which may include homogenous and/or heterogeneous processor architectures).

Memory 106 stores code instructions implementable by processor(s) 102. Memory 106 is implemented as, for example, a random access memory (RAM), read-only memory (ROM), and/or a storage device, for example, non-volatile memory, magnetic media, semiconductor memory devices, hard drive, removable storage, and optical media (e.g., DVD, CD-ROM).

Memory 106 may store virtual machine manager (VMM) 108 that manages and/or runs one or more virtual machines (VM) 110. VMM 108 may be implemented as a hypervisor. VMM 108 may be implemented in hardware, software, firmware, and/or combination of the aforementioned.

Each VM 110 executes one or more virtual function (VF) drivers 112.

Computing device 104 includes and/or is in communication with one or more I/O devices 114. Each I/O device 114 is associated with one or more physical function (PF) drivers 116. The I/O devices 114 may be input/output (I/O) devices, for example, universal serial bus, network adapter (for wired and/or wireless networks), network interface card, accelerator, graphics devices, and storage device.

Computing device 104 may include and/or be in communication with one or more data storage devices 118. Data storage devices 118 may store, for example, different versions of VMs, VFs, PF, and/or VMM, and/or other data. It is noted that code instructions may be selectively loaded from data storage device 118 into memory 106 for execution by processor(s) 102. Data storage device(s) 118 may be implemented as, for example, a memory, a local hard-drive, a removable storage unit, an optical disk, a storage device, and/or as a remote server and/or computing cloud (e.g., accessed via a network connection).

Computing device 104 may be in communication with a network 120, for example, the internet, a local area network, a virtual network, a wireless network, a cellular network, a local bus, a point to point link (e.g., wired), and/or combinations of the aforementioned.

Computing device 104 may include a network interface for communication with network 120. The network interface may be implemented as one or more of I/O devices 114 with associated PF driver(s) 116. The network interface may be virtualized, for use by multiple VMs 110 via corresponding executed VF drivers 112. For example, different VMs 110 may access network 120 by VF driver(s) 112 used to access PF driver(s) 116 of the network interface.

Computing device 104 may include and/or be in communication with one or more physical user interfaces 122 that include a mechanism for user interaction, for example, to enter data (e.g., select a version of the VF to load) and/or to view data (e.g., view a message indicating which capabilities have been negotiated between the VF and PF).

Exemplary physical user interfaces 122 include, for example, one or more of, a touchscreen, a display, gesture activation devices, a keyboard, a mouse, voice activated software using speakers and microphone, and an orchestrator sending data over a network interface.

Referring now back to FIG. 2, I/O device 114 is virtualized via PF driver 116. The physical resources of I/O device 114 are partitioned, and made available for access and use by multiple VMs 110A-D via corresponding executed VF drivers 112A-D. Each VF driver 112A-D communicates with a PF 116 associated with I/O device 114. The VF driver 112A-D may be agnostic to the actual underlying I/O device 114 that is being used.

As described herein, messages are transmitted between VF drivers 112A-D and PF driver 116 for negotiation of capabilities. Each VF driver 112A-D may negotiate its own set of desired capabilities with the capabilities supported by PF 116 and/or I/O device (e.g., HW) 114.

VF drivers 112 and PF drivers 116 are defined, for example, by the PCI express (PCIe) format, in particular, a single root input/output (I/O) virtualization (SR-IOV) feature of the PCIe. SR-IOV enables the portioning of the resources of I/O device 114 (e.g., network adapter) for use by multiple VMs 110A-D. For example, memory and/or network ports of I/O device 114 such as a network adapter are partitioned and shared by VF drivers 112A-D. Network traffic streams flowing between each VF 112A-D and PF 116 may be differentiated and identified, allowing memory and/or interrupt translation between the respective VF 112A-D and PF 116 to be applied. The network traffic streams may flow between PF 116 and each respective VF 112A-D without affecting the VFs. The network traffic may achieve performance that is close to the bare metal (i.e., non-virtualized) performance.

Optionally, VF drivers 112A-D are implemented as Adaptive Virtual Function (AVF) drivers and/or assignable device interface (ADI). As used herein, the term AVF may sometimes refer to, and/or be interchangeable with, the term ADI. Multiple instances of the AVF and/or ADI are implemented on multiple VMs 110. The instances of the AVF and/or ADI VF are mapped to a single common PF driver 116. The instances of the AVF and/or ADI are concurrently and similarly adapted. The AVF adapts to changing capabilities of the physical function driver (PF) with which it is associated. Using the AVF enables updating the PF without necessarily updating all the associated VF drivers. The AVFs have a single common device ID and branding string. Adaptive Virtual Function (AVF) may be implemented as an SR-IOV Virtual Function with the same device ID on different vendor I/O devices 114. In some implementations, the AVF driver is a VF driver which supports all future vendor devices without requiring a VM update. For the AVF driver, every new drop of the VF driver adds additional advanced capabilities that may be activated in the VM when the underlying HW device supports those advanced capabilities, based on a device agnostic way without compromising on the base functionality.

Referring now back to FIG. 3, the dynamic message format includes a first dynamic indication 304 ("Total number of capabilities") indicating a number of capabilities included in the respective single or plurality of messages formatted in the dynamic message format. The total number of capabilities may represent a package of multiple capabilities.

The first indication, which is dynamic, does not lock the dynamic message format to a specific size, allowing new/old drivers to communicate dynamically. The size of the dynamic message format may change to any size needed to define any number of supported capabilities. Additional capabilities may be added to the VF driver and/or PF driver, without necessarily requiring adjustment of the driver code.

The dynamic message format includes one or multiple second dynamic indications 306 ("Capability #N Data Length") each associated with one respective capability. The number of second dynamic indications 306 corresponds to the number of capabilities 304, optionally, the number of capabilities on the current message. Each respective dynamic second indication 306 indicates a size of data stored in the respective message that is associated with the corresponding respective capability. Each respective capability is associated with its own variable data structure (i.e., the second dynamic indication) that stores data regarding which details of the respective capability are supported and/or which details are not.

Each second dynamic indication 306 is associated with a dynamic capability data indication 308 ("Capability #N Data") that stores the data of the respective capability. The size of the data in dynamic capability data indication 308 is according to the corresponding second dynamic indication 306.

Optionally, the dynamic message format includes one or more third dynamic indications 310 ("Capability #N Version") each associated with one respective capability. The number of third dynamic indications 310 corresponds to the number of capabilities 304, optionally, the number of capabilities on the current message. Each respective third dynamic 310 indication indicates a version of the corresponding respective capability. The version may be, for example, one or more of: a major version, a minor version, and a minor sub version.

Optionally, the dynamic message format includes a fifth dynamic indication 316 indicative an overall version of the package of capabilities included in the respective message(s). Fifth dynamic indication 316 may be formatted the same or similarly to third dynamic indications 310.

The capability version of the third and/or fifth dynamic indication may assist with internal features and/or bug fixes, for example, to allow code bypass on the PF and/or VF.

The capability version of the third and/or fifth dynamic indication may provide easier backwards compatibility, in particular where only one side is upgraded, i.e., when only one of the VF and the PF are upgraded. New capabilities may be defined by newer versions, which may have distinctive fields for setting. Versions may be defined for each package of capabilities, making it is easy to negotiate the supported version between a new side and an old side.

Capabilities may be individually selected for activation, for example, where the respective capability is a newer version of an older existing capabilities. Capabilities for which the version is irrelevant and/or unchanged do not necessarily need to be activated (since they are already activated and/or are irrelevant).

Optionally, the number of capabilities in first dynamic indication 304 are included in a single message. Alternatively, the total number of capabilities in first dynamic indication 304 are divided into multiple separate messages. In such implementation, first dynamic indication 304 indicates a total number of capabilities included in the multiple messages, and a fourth dynamic indication 312 indicates the number of capabilities (out of the total number of capabilities of first dynamic indication 304) that are included in each respective message of the multiple messages. When the capabilities do not fit into one messages, multiple messages may be sent. The total number of capabilities may be tracked for activation. When one or more of the total messages are missing, the missing messages with missing capabilities may be requested for activation thereof.

Optionally, dynamic message format 302 includes an Opcode 314 ("Capabilities Message OPCODE") indicating that the respective message is a capabilities messages. Opcode 314 may be for the message as a whole, i.e., impacting the set of capabilities associated with the respective message. Opcode 314 may include an indication that the respective message is one of: a first of multiple messages, a middle of multiple message, a last of multiple, messages, or an only (i.e. single) message. Opcode 314 may be located at a start region of each respective message.

Optionally, dynamic message format 302 includes multiple capabilities opcodes 318 ("Capability #N Opcode), each associated with a respective capability. The value of each opcode 318 may be set for different features. For example, at least one capability opcode 318 includes a value indicating exchange of user register(s) of the I/O device, and one or more of: register names of the user register(s), register offset of the user register(s), masks of the user register(s), field sizes of the user register(s), and bit locations of the user register(s). The dynamic message format may be used to change existing user registers. An example for changing a user register is now provided:
Capability opcode: 5 (register offset handshake)
Capability version: 1.5.0
Capability data length: 4,096
Capability data:
   <Enum_Reg_yy_reg = 1> 123
   <Enum_Reg_my_other _reg = 2> 987
   <Enum_Reg_my_another_reg = 3> 456
Etc...

The above data may be stored in a message implemented using the dynamic message as follows: 5 1.5.0 4,096 1 123 2 987 3 456 ...

Dynamic message format 302 may be implemented based on a type-length-value (TLV) format. The type may be implemented as an opcode 314 denoting that the respective message is a capabilities messages and/or type may be implemented as capabilities opcode 318 for each respective capability. The length is implemented as the first dynamic indication 304. The value is implemented as the second dynamic indication 306 and corresponding capabilities data field 308. Alternatively or additionally, dynamic message format 302 is implemented based on a type-version-length-value (TVLV) format. The version may be implemented as third dynamic indication 310 and/or fifth dynamic indication 316.

The TLV and/or TVLV formats may be nested and/or sequentially implemented, for example, the TLV and/or TVLV format may be implemented for the message as a whole, and the TLV and/or TVLV format may be implemented for each capability.

The TLV and/or TVLV format enables one or more of: searching sequences of the messages using generalized parsing functions, data of capabilities within each message, including the second and/or third dynamic implementations, may be placed in any order within the message. Data within the message may be in binary format, which makes parsing faster and/or the data smaller.

Optionally, dynamic message format 302 is set to a fixed alignment, for example, fixed to a byte and/or word and/or double-word, and/or other alignment format, for example, 8 bytes. A start location within the respective message of the data stored in field 308 associated with each respective capabilities may be set to the fixed alignment value. In response to the data associated with a certain respective capability being less than the fixed alignment value, the data associated with the certain respective capability (i.e., stored in field 308) may be padded to reach the fixed alignment value. The padding may be using irrelevant data, for example, zeros or other characters that do not represent actual data.

The fixed alignment value optimizes processing of the capabilities of the respective message formatted according to the dynamic message format. For example, capabilities may be split according to the fixed alignment value, for parallel negotiation of activation.

Referring now back to FIG. 4, at 402, the VF driver and/or ADI is initialized (the term VF driver and ADI may be interchanged). For example, the VM may initialize the VF driver corresponding to desired capabilities of the I/O device, for example, a new version of the VF driver is loaded to provide additional capabilities for enablement on the I/O device. Initialization may occur, for example, upon reset and/or boot-up of the VM, the VF driver, the PF driver, and/or the hardware device.

At 404, communication between the VF driver and the PF driver corresponding to the I/O device is initiated. Optionally, the VF driver initiates communication with the PF driver.

At 406, the VF driver sends a first message type formatted in the dynamic message format (e.g., as described herein, for example with reference to FIG. 3) to the PF driver with requested capabilities and/or requested parameter of the capabilities supported by the VF driver for enablement on or by the I/O device. Alternatively, the message with requested capabilities and/or requested parameter of the capabilities is formatted according to a standard fixed and/or semi-fixed format. The VF may ask to enable the capabilities in the first message type on the hardware device for the VF and/or expose virtual interfaces of the hardware device for the VF.

The capabilities may include a set of base capabilities set and/or another set of advanced capabilities. Some implementations of the VF driver (e.g., AVF) define a minimum set of features referred to as "base mode," but may provide additional advanced capabilities depending on what capabilities are available in the PF with which the AVF is associated. The base mode includes a set of basic capabilities on the PF driver and the I/O device for use by the VF driver. The basic capabilities may be assumed to be available on hardware devices, as a standard. Examples of basic capabilities for a wired network adapter include basis receive and transmit queues for data transfer, signaling events to software, basic stateless operations such as checksum, segmentation offload, jumbo frames, RSS, and the like.

At 408, the VF driver and the PF driver may enable the set of base capabilities, for operating in the base mode. In such implementation, advanced capabilities are enabled as described with reference to 410. Alternatively, no base mode is initially set-up. In such implementation, there is no difference necessarily between the base capabilities and the advanced capabilities, with both types of capabilities being enabled as described with reference to 410.

At 410, the VF driver sends a first message type formatted in the dynamic message format to the PF driver with requested advanced capabilities and/or requested parameter of the advanced capabilities supported by the VF driver for enablement on or by the I/O device. When base mode is enabled, the capabilities in the first message type are advanced capabilities. When no base mode is enabled, 406 and 408 are not necessarily implemented. The capabilities in the first message type are the requested capabilities.

There may multiple first message types that include the requested capabilities, which may be set as a sequence. In such a case, the opcode (e.g., 314 as described with reference to FIG. 3) may be set accordingly for each message. The opcode for the first message type of the sequence is set to the value indicating FIRST. The opcodes for the middle messages of the sequence are set to the value indicating MIDDLE. The opcode for the last message of the sequence is set to the value indicating LAST. When the requested capabilities are included in a single first message type, the opcode is set to the value indicating ONLY. The total number of capabilities (e.g., 304 field of FIG. 3) and the number of capabilities on current message field (e.g., 312 field of FIG. 3) are set according to the capabilities included in each respective message. The SW/HW may prepare to receive an amount of data according to the remaining messages formatted according to the dynamic message format. Missed messages formatted according to the dynamic message format and/or remaining messages formatted according to the dynamic message format may be polled, until all messages have been received.

At 412, the sequence of first message types is received (e.g., by the PF driver) and processed. The values of opcode fields 414, total number of capabilities 404 field, and the number of capabilities on current message field 412, may be evaluated to determine if all messages of the sequence have been received, or if one or more messages have not been received. That one or more messages are missing may be detected, for example, when the FIRST message or the LAST message have not been received. In another example, that one or more messages are missing may be detected when a number of capabilities in the received messages (i.e., sum of capabilities in in field 412 as in FIG. 4) is less than the total number of capabilities in the received messages (i.e., value in 404 field of FIG. 4).

When all capabilities in the received first message type(s) have been received but the total number of capabilities defined in the first dynamic indication has not been reached, it is in an indication that some capabilities are missing. When one or more messages of the sequence have not been received, a poll for the additional first message types may be generated, to help ensure that the entire set of capabilities have been received. For example, after a timeout interval has expired (or other condition is met), and some messages are missing. Alternatively, an error is generated in response to not all messages being received and/or when the received sizes (e.g., according to the number of defined bytes) in the messages is invalid. A message indicating the error may be sent to the VF driver. The error message may indicate, for example, missing message(s), error in capabilities, and error in size.

At 414, each one of the capabilities in the received first type of messages is independently processed. The capabilities may be sequentially processed until the total number of capabilities is reached.

The first dynamic indication enables detecting when all capabilities in the received first message type(s) have been negotiated.

One or more second message type are transmitted from the PF to the VF. The second message type includes a set of capabilities that are supported by the I/O device and/or PF driver for implementation thereon. Capabilities not supported by the I/O device and/or PF driver may be denied. The set of capabilities may be selected from the requested capabilities provided in the first message type by the VF.

The second message type(s) may be formatted in the dynamic messages format. Alternatively, another format is used for the second message type(s), for example, an array, where each element of the array corresponds to the capabilities of the first message type. The value in each element of the array is binary, indicating whether the PF and/or hardware supports or does not support the capability corresponding to the array element.

At 416, each capability (e.g., advanced feature) is enabled (e.g., activated) by the I/O device and the PF driver for use by the VF drive. The capability may be according to the base (when the base version exists).

Optionally, the capabilities are enabled according to one or more third message types that are transmitted from the VF to the PF. The third message type may be formatted according to the dynamic messages format. The third message type includes a set of enabled capabilities selected from the supported capabilities (e.g., in the second message type) for enablement by the I/O device and/or the PF driver for implementation thereon.

At 418, features described with reference to 414 and/or 416 are iterated. The iterations may be performed to enable each respective capability, or not to enable the respective capability.

Optionally, each capability is independently processed for enablement and/or non-enablement. The enablement or non-enablement of one capability does not necessarily depend on enablement or non-enablement of another capability.

At 420, the enablement of the capabilities is complete. The VF driver may use the enablement capabilities.

Referring now back to FIG. 5, a scalable IOV setup (S-IOV) may be implemented in virtualized environment 502.

Virtualized environment 502 includes one or more of the following exemplary components:
A user space 504 that includes one or more VMs 506, each implementing a virtual network interface controller (vNIC) driver 508 that communicates with ADI 516. Dynamic messages formatted according to the dynamic message format described herein may be transmitted between vNIC 508 to PF 512 via ADI 516, for example, as described with reference to the VF drivers and PF drivers.

A hypervisor/host kernel space 510 that includes a PF driver 512, a virtual device (VDEV) 514 implementing one or more assignable device interfaces (ADI) 516, and a virtual device composition module (VDCM) 518. Virtual device composition module 518 may provide software managed resource mapping between VDEV 514 and ADIs 516.

It is noted there are no VF implemented in scalable IOV virtualized environment 502. ADIs are used instead.

An input/output memory management unit (IOMMU) 550 and direct memory access (DMA) with Process Address Space ID (PASID) remap code 520 implements one or more ADIs 516 and a PF 520. Each ADI 516 is tagged with a unique PASID.

A I/O device is implemented as a network card (NETC) 522. NETC 522 may be compliant with PCIe. The hardware resources of NETC 522 are virtualized via ADI 516, enabling multiple VMs 506 to each access its own assigned ADI 516 to receive and/or transmit traffic via an attached network, for example, via one or more corresponding queues (Q) 524.

NETC 522 includes a set of PF base address registers (BARs) 526 that map to ADIs 516. NETC 522 may include additional registers, for example a PF configuration (Conf) register 528, and an MSI-X register 530.

Virtualizing the resources of the NETC 522 using software imposes a large overhead, reducing overall efficiency of the host.

Virtual device composition module 518 may provide a slow path enumeration (denoted by dashed lines 532) and a fast path enumeration (denoted by solid lines 534) pass-through. Slow path enumeration (denoted by dashed lines 532) is by software. Fast path enumeration (denoted by solid lines 534) is by hardware that is provisioned for direct access. DMA provides isolation between fast paths. Each vNIC driver 508 is provided with an isolated fast path via DMA to partitioned resources of NETC 522 via its assigned ADIs 516 using the corresponding unique PASID.

Messages (e.g., of the first, second, and/or type message types, as described herein) transmitted between vNIC drivers 508 and PF driver 512 for enablement of capabilities requested by vNIC driver 508 that are supported by the NETC 522 and the PF driver 512 for use by vNIC driver 508.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant drivers will be developed and the scope of the term driver is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

## Claims

1. A computing device (104) in communication with an input/output, I/O, device (114) providing virtualized hardware resources for use by a plurality of virtual machines, VM (110), wherein the computing device is configured to:
execute a virtual machine manager, VMM, (108) that implements a physical function, PF, driver (116) corresponding to the I/O device and to a plurality of virtual function, VF, drivers (112) implemented by the plurality of VMs;
receive at least one message of a first message type transmitted from a virtual function, VF, driver of a VM to the PF driver,
wherein the at least one message of the first message type is formatted in a dynamic message format (302) that includes: a first dynamic indication denoting a number of a plurality of capabilities (304), and a plurality of second dynamic indications (306) each associated with one respective capability, each respective dynamic second indication (306) is associated with a dynamic capability data indication (308) that stores data of the respective capability, wherein a size of the data stored in the dynamic capability data indication (308) is denoted by the corresponding second dynamic indication,
wherein the first dynamic indication does not lock the dynamic message format to a specific size and the size of the dynamic message format is adapted to change to any size needed to define any number of supported capabilities,
wherein the at least one message of the first message type includes a set of requested capabilities supported by the VF driver for enablement on or by the I/O device;
transmit at least one message of a second message type from the PF driver to the VF driver,
wherein the at least one message of the second message type includes a set of supported capabilities selected from the requested capabilities that are supported by the I/O device and PF driver for implementation thereon; and
enable the set of enabled capabilities by the I/O device and the PF driver for use by the VF driver.

2. The computing device of claim 1, wherein each one of the plurality of capabilities defined by the dynamic message format is independently processed sequentially until the number of the plurality of capabilities defined by the first dynamic indication is reached.

3. The computing device of claim 2, wherein the computing device is further configured to poll for additional messages of the first message type when the capabilities, defined in the received at least one message of the first message type, have been processed and a number of the processed capabilities is less than the number of capabilities defined by the first dynamic indication.

4. The computing device of any of the previous claims, wherein the dynamic messages format further includes a plurality of third dynamic indications (310) each associated with one respective capability, each respective third dynamic indication denoting a version of the corresponding respective capability.

5. The computing device of claim 4, wherein the dynamic messages format is implemented based on a type-version-length-value, TVLV, format, the type comprises an opcode denoting that the respective message is a capabilities messages, the version denotes the third dynamic indication, the length denotes the first dynamic indication, and the value denotes the second dynamic indication and corresponding capabilities data.

6. The computing device of any of the previous claims, wherein the dynamic messages format is implemented based on a type- length-value, TLV, format, the type comprises an opcode denoting that the respective message is a capabilities messages, the length denotes the first dynamic indication, and the value denotes the second dynamic indication and corresponding capabilities data.

7. The computing device of any of the previous claims, wherein the at least one message of the first message type comprises a plurality of messages, wherein the first dynamic indication of the dynamic message format denotes a total number of capabilities included in the plurality of messages, and wherein the dynamic message format further includes a fourth dynamic indication (312) denoting a number of capabilities of the total number of capabilities of the first dynamic indication that are included in the respective message.

8. The computing device of any of the previous claims, wherein a start location within the respective message of the data associated with each respective capabilities is set to a fixed alignment value.

9. The computing device of claim 8, wherein in response to the data associated with a certain respective capability being less than the fixed alignment value, the data associated with the certain respective capability is padded to reach the fixed alignment value.

10. The computing device of any of the previous claims, wherein the dynamic message format further comprises an opcode (314) denoting a capabilities message and an indication selected from the group of: a first message, a middle message, a last message, and an only message.

11. The computing device of claim 10, wherein the opcode is located at a start region of the dynamic message format.

12. The computing device of any of the previous claims, wherein at least one capability of the dynamic message format includes an opcode for exchange of at least one user register of the I/O device, and one or more of: register names of the at least one user register, register offset of the at least one user register, masks of the at least one user register, field sizes of the at least one user register, and bit locations of the at least one user register.

13. The computing device of any of the previous claims, wherein the dynamic message format includes a fifth dynamic indication (316) denoting an overall version of a package of the plurality of capabilities included in the at least one first message.

14. A method for providing virtualized hardware resources of an input/output, I/O, device for use by a plurality of virtual machines, VM, the method comprising:
executing a virtual machine manager, VMM, that implements a physical function, PF, driver corresponding to the I/O device and to a plurality of virtual function, VF, drivers implemented by the plurality of VMs (402, 404);
receiving at least one message of a first message type transmitted from a virtual function, VF, driver of a VM to the PF driver,
wherein the at least one message of the first message type is formatted in a dynamic message format that includes: a first dynamic indication denoting a number of a plurality of capabilities, and a plurality of second dynamic indications each associated with one respective capability, each respective dynamic second indication is associated with a dynamic capability data indication (308) that stores data of the respective capability, wherein a size of the data stored in the dynamic capability data indication is denoted by the corresponding second dynamic indication,
wherein the first dynamic indication does not lock the dynamic message format to a specific size and the size of the dynamic message format is adapted to change to any size needed to define any number of supported capabilities,
wherein the at least one message of the first message type includes a set of requested capabilities supported by the VF driver for enablement on or by the I/O device;
transmitting at least one message of a second message type from the PF to the VF (414),
wherein the at least one message of the second message type includes a set of supported capabilities selected from the requested capabilities that are supported by the I/O device and PF driver for implementation thereon; and
enabling the set of supported capabilities by the I/O device and the PF driver for use by the VF driver (416).

15. A computer-readable storage medium storing program code, the program code comprising instructions, which when performed on a computer cause the computer to perform the method according to claim 14.

## Patentansprüche

1. Rechenvorrichtung (104), die in Kommunikation mit einer Eingabe-/Ausgabe-Vorrichtung, E/A-Vorrichtung, (114) steht und virtualisierte Hardwareressourcen zur Nutzung durch eine Vielzahl von virtuellen Maschinen, VM, (110) bereitstellt, wobei die Rechenvorrichtung zu Folgendem konfiguriert ist:
Ausführen eines Managers für virtuelle Maschinen, VMM, (108), der einen Treiber einer physischen Funktion, PF-Treiber, (116) entsprechend der E/A-Vorrichtung und einer Vielzahl von Treibern einer virtuellen Funktion, VF-Treibern, (112), die von der Vielzahl der VM implementiert werden, implementiert;
Empfangen mindestens einer Nachricht eines ersten Nachrichtentyps, die von einem Treiber einer virtuellen Funktion, VF-Treiber, einer VM an den PF-Treiber übertragen wird,
wobei die mindestens eine Nachricht des ersten Nachrichtentyps in einem dynamischen Nachrichtenformat (302) formatiert ist, das Folgendes beinhaltet: eine erste dynamische Angabe, die eine Vielzahl von Fähigkeiten (304) bezeichnet, und eine Vielzahl von zweiten dynamischen Angaben (306), von denen jede mit einer jeweiligen Fähigkeit assoziiert ist, wobei jede jeweilige dynamische zweite Angabe (306) mit einer dynamischen Fähigkeitendatenangabe (308) assoziiert ist, die Daten der jeweiligen Fähigkeit speichert, wobei eine Größe der Daten, die in der dynamischen Fähigkeitendatenangabe (308) gespeichert ist, durch die entsprechende zweite dynamische Angabe bezeichnet ist, wobei die erste dynamische Angabe das dynamische Nachrichtenformat nicht auf eine bestimmte Größe festlegt und die Größe des dynamischen Nachrichtenformats dazu ausgelegt ist, sich auf eine beliebige Größe zu ändern, die zum Definieren einer beliebigen Anzahl unterstützter Fähigkeiten erforderlich ist,
wobei die mindestens eine Nachricht des ersten Nachrichtentyps einen Satz angeforderter Fähigkeiten beinhaltet, die von dem VF-Treiber zum Aktivieren auf oder durch die E/A-Vorrichtung unterstützt werden;
übertragen mindestens einer Nachricht eines zweiten Nachrichtentyps von dem PF-Treiber an den VF-Treiber,
wobei die mindestens eine Nachricht des zweiten Nachrichtentyps einen Satz unterstützter Fähigkeiten beinhaltet, die aus den angeforderten Fähigkeiten, die von der E/A-Vorrichtung und dem PF-Treiber zur Implementierung darauf unterstützt werden, ausgewählt werden; und
Aktivieren des Satzes aktivierter Fähigkeiten durch die E/A-Vorrichtung und den PF-Treiber zur Verwendung durch den VF-Treiber.

2. Rechenvorrichtung nach Anspruch 1, wobei jede der Vielzahl von Fähigkeiten, die durch das dynamische Nachrichtenformat definiert sind, unabhängig sequentiell verarbeitet wird, bis die Anzahl der Vielzahl von Fähigkeiten, die durch die erste dynamische Angabe definiert ist, erreicht ist.

3. Rechenvorrichtung nach Anspruch 2, wobei die Rechenvorrichtung ferner dazu konfiguriert ist, zusätzliche Nachrichten des ersten Nachrichtentyps abzufragen, wenn die Fähigkeiten, die in der empfangenen mindestens einen Nachricht des ersten Nachrichtentyps definiert sind, verarbeitet wurden und eine Anzahl der verarbeiteten Fähigkeiten niedriger ist als die Anzahl von Fähigkeiten, die durch die erste dynamische Angabe definiert ist.

4. Rechenvorrichtung nach einem der vorhergehenden Ansprüche, wobei das dynamische Nachrichtenformat ferner eine Vielzahl von dritten dynamischen Angaben (310) beinhaltet, wobei jede mit einer jeweiligen Fähigkeit assoziiert ist, wobei jede jeweilige dritte dynamische Angabe eine Version der entsprechenden jeweiligen Fähigkeit bezeichnet.

5. Rechenvorrichtung nach Anspruch 4, wobei das dynamische Nachrichtenformat basierend auf einem Typ-Version-Länge-Wert-Format, TVLV-Format, implementiert ist, wobei der Typ einen Opcode umfasst, der bezeichnet, dass es sich bei der jeweiligen Nachricht um eine Fähigkeitennachricht handelt, und wobei die Version die dritte dynamische Angabe bezeichnet, wobei die Länge die erste dynamische Angabe bezeichnet und wobei der Wert die zweite dynamische Angabe und entsprechende Fähigkeitendaten bezeichnet.

6. Rechenvorrichtung nach einem der vorhergehenden Ansprüche, wobei das dynamische Nachrichtenformat basierend auf einem Typ-Länge-Wert-Format, TLV-Format, implementiert ist, wobei der Typ einen Opcode umfasst, der bezeichnet, dass es sich bei der jeweiligen Nachricht um eine Fähigkeitennachricht handelt, wobei die Länge die erste dynamische Angabe bezeichnet und wobei der Wert die zweite dynamische Angabe und entsprechende Fähigkeitendaten bezeichnet.

7. Rechenvorrichtung nach einem der vorhergehenden Ansprüche, wobei die mindestens eine Nachricht des ersten Nachrichtentyps eine Vielzahl von Nachrichten umfasst, wobei die erste dynamische Angabe des dynamischen Nachrichtenformats eine Gesamtzahl von Fähigkeiten, die in der Vielzahl von Nachrichten beinhaltet sind, bezeichnet und wobei das dynamische Nachrichtenformat ferner eine vierte dynamische Angabe (312) beinhaltet, die eine Anzahl von Fähigkeiten der Gesamtzahl von Fähigkeiten der ersten dynamischen Angabe, die in der jeweiligen Nachricht beinhaltet sind, bezeichnet.

8. Rechenvorrichtung nach einem der vorhergehenden Ansprüche, wobei eine Startposition innerhalb der jeweiligen Nachricht der Daten, die mit den jeweiligen Fähigkeiten assoziiert sind, auf einen festen Alignment-Wert eingestellt ist.

9. Rechenvorrichtung nach Anspruch 8, wobei in Antwort darauf, dass die Daten, die mit einer bestimmten jeweiligen Fähigkeit assoziiert sind, kleiner als der festgelegte Alignment-Wert sind, die Daten, die mit der bestimmten jeweiligen Fähigkeit assoziiert sind, mit Füllbits aufgefüllt werden, um den festgelegten Alignment-Wert zu erreichen.

10. Rechenvorrichtung nach einem der vorhergehenden Ansprüche, wobei das dynamische Nachrichtenformat ferner einen Opcode (314) umfasst, der eine Fähigkeitennachricht und eine Angabe bezeichnet, ausgewählt aus der folgenden Gruppe: eine erste Nachricht, eine mittlere Nachricht, eine letzte Nachricht und eine einzige Nachricht.

11. Rechenvorrichtung nach Anspruch 10, wobei sich der Opcode in einem Startbereich des dynamischen Nachrichtenformats befindet.

12. Rechenvorrichtung nach einem der vorhergehenden Ansprüche, wobei mindestens eine Fähigkeit des dynamischen Nachrichtenformats einen Opcode zum Austausch von mindestens einem Benutzerregister der E/A-Vorrichtung und eines oder mehrere der Folgenden beinhaltet: Registernamen von dem mindestens einen Benutzerregister, Registeroffset von dem mindestens einen Benutzerregister, Masken von dem mindestens einen Benutzerregister, Feldgrößen von dem mindestens einen Benutzerregister und Bitpositionen von dem mindestens einen Benutzerregister.

13. Rechenvorrichtung nach einem der vorhergehenden Ansprüche, wobei das dynamische Nachrichtenformat eine fünfte dynamische Angabe (316) beinhaltet, die eine Gesamtversion eines Pakets der Vielzahl von Fähigkeiten, die in der mindestens einen ersten Nachricht beinhaltet sind, bezeichnet.

14. Verfahren zum Bereitstellen virtualisierter Hardwareressourcen einer Eingabe-/Ausgabe-Vorrichtung, E/A-Vorrichtung, zur Verwendung durch eine Vielzahl von virtuellen Maschinen, VM, wobei das Verfahren Folgendes umfasst:
Ausführen eines Managers für virtuelle Maschinen, VMM, der einen Treiber einer physischen Funktion, PF-Treiber, entsprechend der E/A-Vorrichtung und einer Vielzahl von Treibern einer virtuellen Funktion, VF-Treibern, die von der Vielzahl der VM (402, 404) implementiert werden, implementiert;
Empfangen mindestens einer Nachricht eines ersten Nachrichtentyps, die von einem Treiber einer virtuellen Funktion, VF-Treiber, einer VM an den PF-Treiber übertragen wird,
wobei die mindestens eine Nachricht des ersten Nachrichtentyps in einem dynamischen Nachrichtenformat formatiert ist, das Folgendes beinhaltet: eine erste dynamische Angabe, die eine Vielzahl von Fähigkeiten bezeichnet, und eine Vielzahl von zweiten dynamischen Angaben, von denen jede mit einer jeweiligen Fähigkeit assoziiert ist, wobei jede jeweilige dynamische zweite Angabe mit einer dynamischen Fähigkeitendatenangabe (308) assoziiert ist, die Daten der jeweiligen Fähigkeit speichert, wobei eine Größe der Daten, die in der dynamischen Fähigkeitendatenangabe gespeichert ist, durch die entsprechende zweite dynamische Angabe bezeichnet ist,
wobei die erste dynamische Angabe das dynamische Nachrichtenformat nicht auf eine bestimmte Größe festlegt und die Größe des dynamischen Nachrichtenformats dazu ausgelegt ist, sich auf eine beliebige Größe zu ändern, die zum Definieren einer beliebigen Anzahl unterstützter Fähigkeiten erforderlich ist,
wobei die mindestens eine Nachricht des ersten Nachrichtentyps einen Satz angeforderter Fähigkeiten beinhaltet, die von dem VF-Treiber zum Aktivieren auf oder durch die E/A-Vorrichtung unterstützt werden;
Übertragen mindestens einer Nachricht eines zweiten Nachrichtentyps von dem PF zu dem VF (414),
wobei die mindestens eine Nachricht des zweiten Nachrichtentyps einen Satz unterstützter Fähigkeiten beinhaltet, die aus den angeforderten Fähigkeiten, die von der E/A-Vorrichtung und dem PF-Treiber zur Implementierung darauf unterstützt werden, ausgewählt werden; und
Aktivieren des Satzes unterstützter Funktionen durch die E/A-Vorrichtung und den PF-Treiber zur Verwendung durch den VF-Treiber (416).

15. Computerlesbares Speichermedium, das Programmcode speichert, wobei der Programmcode Anweisungen umfasst, die, wenn sie auf einem Computer ausgeführt werden, den Computer dazu veranlassen, das Verfahren nach Anspruch 14 durchzuführen.

## Revendications

1. Dispositif informatique (104) en communication avec un dispositif d'entrée/sortie, E/S (114) fournissant des ressources matérielles virtualisées destinées à être utilisées par une pluralité de machines virtuelles, VM (110), dans lequel le dispositif informatique est configuré pour :
exécuter un gestionnaire de machine virtuelle, VMM, (108) qui met en oeuvre un pilote d'une fonction physique, PF, (116) correspondant au dispositif d'E/S et à une pluralité de pilotes de fonction virtuelle, VF (112) mis en oeuvre par la pluralité de machines virtuelles ;
recevoir au moins un message d'un premier type de message transmis depuis un pilote de fonction virtuelle, VF, d'une VM vers le pilote PF,
dans lequel l'au moins un message du premier type de message est formaté dans un format de message dynamique (302) qui comporte : une première indication dynamique désignant un certain nombre d'une pluralité de capacités (304), et une pluralité de deuxièmes indications dynamiques (306) chacune étant associée à une capacité respective, chaque deuxième indication dynamique respective (306) est associée à une indication de données de capacité dynamique (308) qui stocke des données de la capacité respective, une taille des données stockées dans l'indication de données de capacité dynamique (308) étant désignée par la deuxième indication dynamique correspondante,
dans lequel la première indication dynamique ne verrouille pas le format de message dynamique sur une taille spécifique et la taille du format de message dynamique est adaptée pour changer à n'importe quelle taille nécessaire pour définir n'importe quel nombre de capacités prises en charge,
dans lequel l'au moins un message du premier type de message comporte un ensemble de capacités demandées prises en charge par le pilote VF pour une activation sur ou par le dispositif d'E/S ;
transmettre au moins un message d'un second type de message du pilote PF au pilote VF,
dans lequel l'au moins un message du second type de message comporte un ensemble de capacités prises en charge sélectionnées parmi les capacités demandées qui sont prises en charge par le dispositif d'E/S et par le pilote PF pour une mise en oeuvre sur celui-ci ; et
activer l'ensemble de fonctionnalités activées par le dispositif d'E/S et par le pilote PF pour une utilisation par le pilote VF.

2. Dispositif informatique selon la revendication 1, dans lequel chacune de la pluralité de capacités définies par le format de message dynamique est traitée indépendamment séquentiellement jusqu'à ce que le nombre de la pluralité de capacités définies par la première indication dynamique soit atteint.

3. Dispositif informatique selon la revendication 2, dans lequel le dispositif informatique est en outre configuré pour interroger des messages supplémentaires du premier type de message lorsque les capacités, définies dans au moins un message reçu du premier type de message, ont été traitées et un certain nombre des capacités traitées est inférieur au nombre de capacités défini par la première indication dynamique.

4. Dispositif informatique selon l'une quelconque des revendications précédentes, dans lequel le format de messages dynamiques comporte en outre une pluralité de troisièmes indications dynamiques (310), chacune associée à une capacité respective, chaque troisième indication dynamique respective désignant une version de la capacité respective correspondante.

5. Dispositif informatique selon la revendication 4, dans lequel le format de message dynamique est mis en oeuvre sur la base d'un format type-version-longueur-valeur, TVLV, le type comprend un opcode indiquant que le message respectif est un message de capacités, la version désigne la troisième indication dynamique, la longueur désigne la première indication dynamique, et la valeur désigne la deuxième indication dynamique et les données de capacités correspondantes.

6. Dispositif informatique selon l'une quelconque des revendications précédentes, dans lequel le format de message dynamique est mis en oeuvre sur la base d'un format type-version-longueur-valeur, TVLV, le type comprend un opcode indiquant que le message respectif est un message de capacités, la longueur désigne la première indication dynamique, et la valeur désigne la deuxième indication dynamique et les données de capacités correspondantes.

7. Dispositif informatique selon l'une quelconque des revendications précédentes, dans lequel l'au moins un message du premier type de message comprend une pluralité de messages, dans lequel la première indication dynamique du format de message dynamique désigne un nombre total de capacités incluses dans la pluralité de messages, et dans lequel le format de message dynamique comporte en outre une quatrième indication dynamique (312) désignant un nombre de capacités parmi le nombre total de capacités de la première indication dynamique qui sont incluses dans le message respectif.

8. Dispositif informatique selon l'une quelconque des revendications précédentes, dans lequel un emplacement de départ dans le message respectif des données associées à chaque capacité respective est défini sur une valeur d'alignement fixe.

9. Dispositif informatique selon la revendication 8, dans lequel en réponse au fait que les données associées à une certaine capacité respective sont inférieures à la valeur d'alignement fixe, les données associées à la certaine capacité respective sont complétées pour atteindre la valeur d'alignement fixe.

10. Dispositif informatique selon l'une quelconque des revendications précédentes, dans lequel le format de message dynamique comprend en outre un opcode (314) désignant un message de capacités et une indication sélectionnée dans le groupe composés de : un premier message, un message intermédiaire, un dernier message et un seul message.

11. Dispositif informatique selon la revendication 10, dans lequel l'opcode est situé dans un emplacement de départ du format de message dynamique.

12. Dispositif informatique selon l'une quelconque des revendications précédentes, dans lequel au moins une capacité du format de message dynamique comporte un opcode pour l'échange d'au moins un registre d'utilisateur du dispositif d'E/S, et un ou plusieurs parmi : les noms de registre d'au moins un registre utilisateur, un décalage de registre d'au moins un registre utilisateur, des masques de l'au moins un registre utilisateur, des tailles de champ de l'au moins un registre utilisateur et des emplacements de bits de l'au moins un registre utilisateur.

13. Dispositif informatique selon l'une quelconque des revendications précédentes, dans lequel le format de message dynamique comporte une cinquième indication dynamique (316) désignant une version globale d'un ensemble de la pluralité de capacités incluses dans l'au moins un premier message.

14. Procédé pour fournir des ressources matérielles virtualisées d'un dispositif d'entrée/sortie, E/S, destiné à être utilisé par une pluralité de machines virtuelles, VM, le procédé comprenant :
l'exécution d'un gestionnaire de machine virtuelle, VMM, qui met en oeuvre un pilote d'une fonction physique, PF, correspondant au dispositif d'E/S et à une pluralité de pilotes de fonction virtuelle, VF mis en oeuvre par la pluralité de machines virtuelles (402, 404) ;
la réception d'au moins un message d'un premier type de message transmis depuis un pilote d'une fonction virtuelle, VF, d'une VM vers le pilote PF,
dans lequel l'au moins un message du premier type de message est formaté dans un format de message dynamique qui comporte : une première indication dynamique désignant un certain nombre d'une pluralité de capacités, et une pluralité de deuxièmes indications dynamiques chacune étant associée à une capacité respective, chaque deuxième indication dynamique respective est associée à une indication de données de capacité dynamique (308) qui stocke des données de la capacité respective, une taille des données stockées dans l'indication de données de capacité dynamique étant désignée par la deuxième indication dynamique correspondante,
dans lequel la première indication dynamique ne verrouille pas le format de message dynamique sur une taille spécifique et la taille du format de message dynamique est adaptée pour changer à n'importe quelle taille nécessaire pour définir n'importe quel nombre de capacités prises en charge,
dans lequel l'au moins un message du premier type de message comporte un ensemble de capacités demandées prises en charge par le pilote VF pour une activation sur ou par le dispositif d'E/S ;
la transmission d'au moins un message d'un second type de message du PF au VF (414),
dans lequel l'au moins un message du second type de message comporte un ensemble de capacités prises en charge sélectionnées parmi les capacités demandées qui sont prises en charge par le dispositif d'E/S et par le pilote PF pour une mise en oeuvre sur celui-ci ; et
l'activation de l'ensemble des capacités prises en charge par le dispositif d'E/S et par le pilote PF pour une utilisation par le pilote VF (416).

15. Support de stockage lisible par ordinateur stockant un code de programme, le code de programme comprenant des instructions qui, lorsqu'elles sont exécutées sur un ordinateur, amènent l'ordinateur à exécuter le procédé selon la revendication 14.
